# EUROPÄISCHE PATENTANMELDUNG

(11) **EP 0 954 122 A1**
(43) Veröffentlichungstag der Anmeldung: **03.11.1999**
(21) Anmeldenummer: 98107763.9
(22) Anmeldetag: 28.04.1998
(51) Int. Cl.: H04B 7/26

(54) **Verfahren zum Betreiben eines Funk-Kommunikationssystems und derartiges Funk-Kommunikationssystem**

(71) Anmelder: SIEMENS AKTIENGESELLSCHAFT, 80333 München (DE)
(72) Erfinder: Färber, Michael, Dipl.-Ing. (FH), 82515 Wolfratshausen (DE)

(57) **Zusammenfassung**

Erfindungsgemäß werden die Signale einer ersten Basisstation, die bereits installiert ist und Funkverbindungen für eine Nachrichtenübertragung zu Mobilstationen ermöglicht, durch eine zweite Basisstation zumindest zeitweilig ausgewertet, wobei die zweite Basisstation entsprechend der Auswertung der Signale eine Synchronisation durchführt. Insbesondere in TDD-Übertragungssystemen mit Benutzung des gleichen Frequenzbandes in benachbarten Zellen werden durch die Synchronisation die Interferenzen verringert, da der Sende- und Empfangsfall zwischen den Zellen besser aufeinander abgestimmt ist. Zudem sind keine zusätzlichen Verbindungen zu zentralen Einheiten zur Netzsynchronisation erforderlich, da die Synchronisation aus der Auswertung der Signale bereits sendender Basisstationen heraus erfolgt.

## Beschreibung

Die Erfindung betrifft ein Verfahren zum Betreiben eines Funk-Kommunikationssystems und ein derartiges Funk-Kommunikationssystem, insbesondere ein Mobilfunksystem mit TDD-Teilnehmerseparierung.

In Funk-Kommunikationssystemen werden Informationen (beispielsweise Sprache, Bildinformationen oder andere Daten) mit Hilfe von elektromagnetischen Wellen über eine Funkschnittstelle zwischen sendender und empfangender Funkstation (Basisstation bzw. Mobilstation) übertragen. Das Abstrahlen der elektromagnetischen Wellen erfolgt dabei mit Trägerfrequenzen, die in dem für das jeweilige System vorgesehenen Frequenzband liegen. Für zukünftige Mobilfunksysteme mit CDMA- oder TD/CDMA-Übertragungsverfahren über die Funkschnittstelle, beispielsweise das UMTS (Universal Mobile Telecommunication System) oder andere Systeme der 3. Generation sind Frequenzen im Frequenzband von ca. 2000 MHz vorgesehen.

Frequenzmultiplex (FDMA), Zeitlagenmultiplex (TDMA) oder ein als Codemultiplex (CDMA) bekanntes Verfahren dienen der Unterscheidung der Signalquellen und damit zur Auswertung der Signale. Eine besondere Ausprägung des Zeitlagenmultiplex (TDMA) ist ein TDD (time division duplex) Übertragungsverfahren, bei dem in einem gemeinsamen Frequenzband die Übertragung sowohl in Aufwärtsrichtung, d.h. von der Mobilstation zur Basisstation, als auch in Abwärtsrichtung, d.h. von der Basisstation zur Mobilstation, erfolgt.

Ein derartiges TDD-Übertragungsverfahren ist aus dem DECT (digital enhanced cordless telephony) System bekannt. Ein Rahmen beim DECT-System besteht aus 24 Zeitschlitzen, von denen jeweils die Hälfte ständig für die Auf- und die Abwärtsrichtung genutzt wird. Das DECT-System kennt im Gegensatz zu Mobilfunksystemen keine netzseitige Zuteilung von funktechnischen Ressourcen. Die Mobilstation suchen sich entsprechend der Übertragungsverhältnisse selbst einen Frequenzbereich und einen Zeitschlitz aus. Zwischen den unterschiedlichen Basisstationen herrschen u.U. zwar Wechselwirkungen, doch aufgrund des Betreibens der DECT-System im unlizensierten Band und der nicht vorhandenen Netzplanung sind die Basisstationen nicht aufeinander abgestimmt.

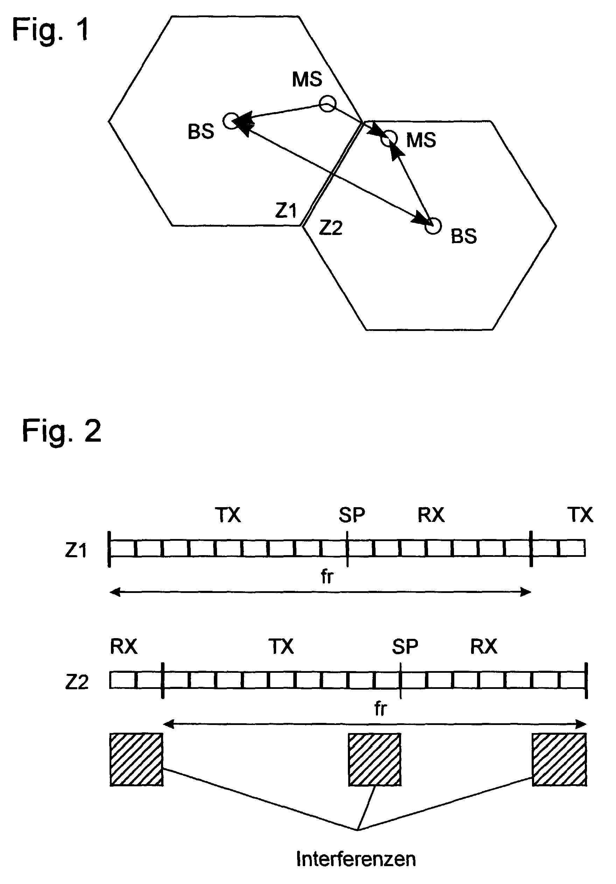

Auch für die dritte Mobilfunkgeneration sind TDD-Übertragungsverfahren vorgesehen, siehe dazu z.B. DE 198 10 813 oder DE 198 08 948. Die bisher gemachten Überlegungen zum TDD-Übertragungsverfahren verkennen die Probleme der gegenseitigen Störungen unterschiedlicher Basisstationen und Mobilstationen, die im gleichen Frequenzband betrieben werden. Für zwei benachbarte Zellen Z1 und Z2 mit Basisstationen BS und Mobilstationen MS nach FIG. 1 ergeben sich für eine Mobilstation MS, die Signale der ihr zugeordneten Basisstation BS empfängt, besonders starke Interferenzen von einer Mobilstation MS, die sich nahebei in der Nachbarzelle befindet. Dieser Fall ist besonders an den Zellgrenzen kritisch, wobei bei einer homogener Verteilung der Mobilstationen dieser Fall sehr oft auftritt.

So ergeben sich nach FIG. 2 Interferenzen für die Konstellation, daß sich der Sendefall TX einer Mobilstation MS mit dem Empfangsfall RX der anderen Mobilstation MS überlappt. Ein Umschaltpunkt SP trennt dabei jeweils den Sende- TX und den Empfangsfall RX. Für eine rahmenweise Übertragung, wobei ein Rahmen fr mehrere Zeitschlitze umfaßt, sind die Interferenzen proportional der Verschiebung des Rahmenbeginns zwischen beiden Zellen Z1, Z2. Starke Interferenzen verursachen Verluste bei der spektralen Effizienz des Funk-Kommunikationssystems.

Der Erfindung liegt folglich die Aufgabe zugrunde, ein verbessertes Verfahren und ein verbessertes Funk-Kommunikationssystem anzugeben, bei denen die spektrale Effizienz erhöht wird. Diese Aufgabe wird durch das Verfahren mit den Merkmalen des Anspruchs 1 und das Funk-Kommunikationssystem mit den Merkmalen des Anspruchs 10 gelöst. Vorteilhafte Weiterbildungen sind den Unteransprüchen zu entnehmen.

Erfindungsgemäß werden die Signale einer ersten Basisstation, die bereits installiert ist und Funkverbindungen für eine Nachrichtenübertragung zu Mobilstationen ermöglicht, durch eine zweite Basisstation zumindest zeitweilig ausgewertet, wobei die zweite Basisstation entsprechend der Auswertung der Signale eine Synchronisation durchführt. Durch die Synchronisation werden die Interferenzen verringert, da der Sende- und Empfangsfall zwischen den Zellen besser aufeinander abgestimmt ist. Zudem sind keine zusätzlichen Verbindungen zu zentralen Einheiten zur Netzsynchronisation erforderlich, da die Synchronisation aus der Auswertung der Signale bereits sendender Basisstationen heraus erfolgt.

Nach einer vorteilhaften Weiterbildung der Erfindung werden die Signale in einem Organisationskanal gesendet. Aufgrund der netzweit bekannten Eigenschaften dieses Organisationskanals, der ansonsten auch von Mobilstationen benutzt wird, ist die Synchronisation besonders einfach durchzuführen.

Die Genauigkeit wird verbesset, wenn die zweite Basisstation die Signale einer möglichst großen Anzahl von benachbarten Basisstationen auswertet. Da eine Basisstation in der Regel von einer Vielzahl von weiteren Basisstationen umgeben ist, wird somit die Synchronität zu all diesen Basisstationen hergestellt. Vorteilhafterweise wird die Synchronisation basierend auf einer Mittelung von Empfangszeitpunkten der Signale mehrerer Basisstationen durchgeführt. Damit wird die relative Verschiebung der Sendezeitpunkte von Basisstationen in einer Gegend auf einen geringen tolerierbaren Wert gebracht. Bei dieser Mittelung kann es vorgesehen sein, daß eine unterschiedliche Wichtung der Empfangszeitpunkte bezüglich unterschiedlicher Basisstationen berücksichtigt wird. Zum Beispiel bedeutet ein hoher Empfangspegel in der Regel eine benachbarte Basisstation in geringer Entfernung oder mit besonders großen Störeinfluß, so daß für die Beziehung zu dieser Basisstation die Synchronisation besonders wichtig ist. Der Wichtungsfaktor ist deshalb für deren Signal groß.

Die Synchronisation braucht dabei nicht nur innerhalb eines Systems durchgeführt werden. Durch Scannen benachbarter Frequenzbänder oder auch an räumlichen Grenzen eines Funk-Kommunikationssystems wertet die zweite Basisstation zusätzlich die Signale von Basisstationen von weiteren Funk-Kommunikationssystemen aus. Damit werden auch die Interferenzen zwischen den Systemen verringert.

um insbesondere die Effekte der Interferenzen aus einer Überlappung von Sende- und Empfangsfall benachbarter Mobilstationen zu begrenzen, stellt die Synchronisation den Rahmenbeginn ein, wenn die Nachrichtenübertragung der Funkverbindungen rahmenweise erfolgt. Eine geringe Verschiebung des Rahmenbeginns, z.B. < 5% eines Zeitschlitzes, ist trotzdem tolerierbar, da nur ein Teil eines Zeitschlitzes davon betroffen ist und ein Teil der Störung noch in eine Schutzzeit (guard period) fällt, die keine Informationen beinhaltet.

Besonders wirkungsvoll ist das erfindungsgemäße Verfahren bei einer Anwendung in Funk-Kommunikationssystemen mit einer Nachrichtenübertragung mittels TDD-Teilnehmerseparierung. Durch die Nachrichtenübertragung in Auf- und Abwärtsrichtung im gleichen Frequenzband sind die Interferenzen besonders stark. Dies gilt insbesondere, falls ein kleiner sogenannter Frequenzwiederholwert (frequency reuse cluster), d.h. im Extremfall in benachbarten Zellen das gleiche Frequenzband, benutzt wird.

Weiterhin ist es vorteilhaft die Synchronisation bei der Inbetriebnahme der zweiten Basisstation durchzuführen. Somit sind bei der Inbetriebnahme keine zusätzlichen physikalischen Verbindungen zum Netz erforderlich. Die vorhanden Empfangseinrichtungen der Basisstationen können zur Synchronisierung benutzt werden. Auch bei Basisstationen im privatem Bereich wird eine Interferenzreduzierung erreicht, da sie sich auf das die Basisstation umgebende Funk-Kommunikationssystem harmonisiert. Das erfindungsgemäße Verfahren kann mit anderenen netzseitigen Synchronisationsverfahren kombiniert werden. Das ist inbesondere in Räumen mit eingeschränkten Funkkontakt vorteilhaft.

Im folgenden wird die Erfindung anhand eines Ausführungsbeispiels bezugnehmend auf zeichnerische Darstellungen näher erläutert.

Dabei zeigen
- FIG 1 und 2: ein Interferenzszenario zwischen zwei benachbarten Zellen, in denen ein TDD-Übertragungsverfahren das gleiche Frequenzband nutzt,
- FIG 3: ein Blockschaltbild eines Mobilfunksystems,
- FIG 4: eine schematische Darstellung der Rahmenstruktur des TDD-Übertragungsverfahrens,
- FIG 5, 6 und 7: eine aufeinanderfolgende Synchronisation von Basisstationen eines Mobilfunksystems,
- FIG 8: ein vereinfachtes Blockschaltbild einer Basisstation,
- FIG 9: ein Ablaufdiagramm der Synchronisation.

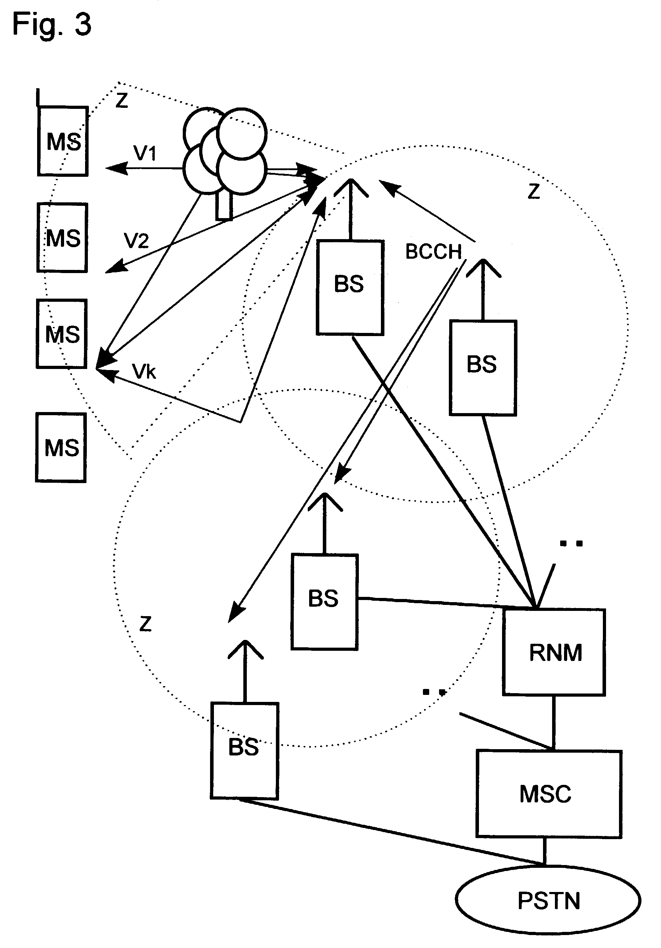

Das in FIG 3 dargestellte Mobilfunksystem als Beispiel eines Funk-Kommunikationssystem besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS. Eine solche Basisstation BS kann über eine Funkschnittstelle eine Verbindung zu weiteren Funkstationen, z.B. Mobilstationen MS oder anderweitigen mobilen und stationären Endgeräten aufbauen. Durch jede Basisstation BS wird zumindest eine Funkzelle Z gebildet. Bei einer Sektorisierung oder bei hierarchischen Zellstrukturen werden pro Basisstation BS auch mehrere Funkzellen Z versorgt.

In FIG 3 sind beispielhaft Verbindungen V1, V2, Vk zur Übertragung von Nutzinformationen und Signalisierungsinformationen zwischen Mobilstationen MS und einer Basisstation BS dargestellt. Ein Operations- und Wartungszentrum OMC realisiert Kontroll- und Wartungsfunktionen für das Mobilfunksystem bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß. Auch Basisstationen, die als Heimbasisstationen im privatem Bereich eingesetzt sind ohne von der Funknetzplanung betroffen zu sein, können Verbindungen zu Mobilstationen MS aufbauen. Diese Heimoasisstationen sind an ein Festnetz angeschlossen.

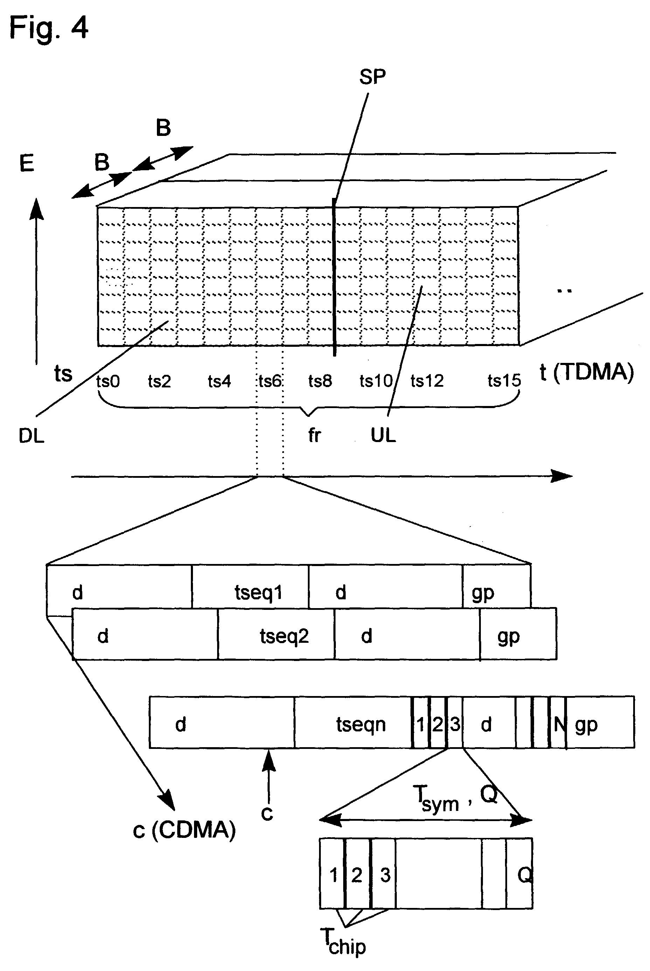

Die Rahmenstruktur der Funkübertragung ist aus FIG 4 ersichtlich. Gemäß einer TDMA-Komponente ist eine Aufteilung eines breitbandigen Frequenzbereiches, beispielsweise der Bandbreite B = 5 MHz in mehrere Zeitschlitze ts gleicher Zeitdauer, beispielsweise 16 Zeitschlitze ts0 bis ts15 vorgesehen. Ein Teil der Zeitschlitze ts0 bis ts8 werden in Abwärtsrichtung DL und ein Teil der Zeitschlitze ts9 bis ts15 werden in Aufwärtsrichtung UL benutzt. Dazwischen liegt ein Umschaltpunkt SP. Bei diesem TDD-Übertragungsverfahren entspricht das Frequenzband für die Aufwärtsrichtung UL dem Frequenzband für die Abwärtsrichtung DL. Gleiches wiederholt sich für weitere Trägerfrequenzen.

Innerhalb eines Zeitschlitzes, der zur Nutzdatenübertragung vorgesehen sind, werden Informationen mehrerer Verbindungen in Funkblöcken übertragen. Diese Funkblöcke zur Nutzdatenübertragung bestehen aus Abschnitten mit Daten d, in denen empfangsseitig bekannte Trainingssequenzen tseq1 bis tseqn eingebettet sind. Die Daten d sind verbindungsindividuell mit einer Feinstruktur, einem Teilnehmerkode c, gespreizt, so daß empfangsseitig beispielsweise n Verbindungen durch diese CDMA-Komponente separierbar sind.

Die Spreizung von einzelnen Symbolen der Daten d bewirkt, daß innerhalb der Symboldauer T_{sym} Q Chips der Dauer T_{chip} übertragen werden. Die Q Chips bilden dabei den verbindungsindividuellen Teilnehmerkode c. Weiterhin ist innerhalb des Zeitschlitzes ts eine Schutzzeit gp zur Kompensation unterschiedlicher Signallaufzeiten der Verbindungen vorgesehen.

Innerhalb eines breitbandigen Frequenzbereiches B werden die aufeinanderfolgenden Zeitschlitze ts nach einer Rahmenstruktur gegliedert. So werden 16 Zeitschlitze ts zu einem Rahmen fr zusammengefaßt.

Die verwendeten Parameter der Funkschnittstelle sind vorteilhafterweise:
- Chiprate:: 4096 Mcps
- Rahmendauer:: 10 ms
- Anzahl Zeitschlitze:: 16
- Dauer eines Zeitschlitzes:: 625 µs
- Spreizfaktor:: 16
- Modulationsart:: QPSK
- Bandbreite:: 5 MHz
- Frequenzwiederholungswert:: 1

Diese Parameter ermöglichen eine bestmögliche Harmonisierung mit einem FDD (frequency division duplex) Modus für die 3. Mobilfunkgeneration. Vorteilhafterweise ist der Umschaltpunkt SP innerhalb einer Gruppe von Zellen gleich gewählt.

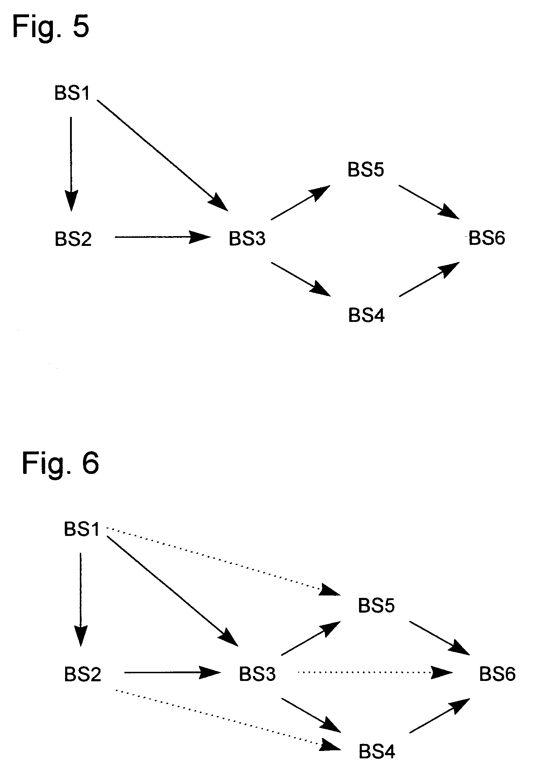

Beispiele für den Ablauf der Synchronisation mehrerer Basisstationen BS1 bis BS7 sind in den Figuren 5 bis 7 gezeigt. Das Ausführungsbeispiel beschränkt sich auf die Darstellung der Inbetriebnahme. Aber auch während des Betriebs kann eine erneute Synchronisation durchgeführt werden.

Die Synchronisation einer Basisstation BS wird durch Auswertung der Funkschnittstelle, d.h. durch Auswertung von Signalen durchgeführt, die von anderen Basisstationen gesendet werden. Die Signale werden in einem Organisationskanal BCCH gesendet, der normalerweise von Mobilstationen MS zur Synchronisation auf das Mobilfunksystem benutzt wird.

Nach FIG. 5 stellt eine erste Basisstation BS1 unabhängig von der Netzumgebung einen Zeitgeber ein und synchronisiert die Funkübertragung auf diesen Zeitgeber. In Folge werden Signale, unter anderem auch Signale eines Organisationskanals BCCH, gesendet. Eine zweite Basisstation BS2 empfängt diese Signale und wertet sie zumindest zeitweilig während der Inbetriebnahme aus. Für einen typischen Abstand zwischen den Basisstationen BS1, BS2 von 2 km ergibt sich eine Signallaufzeit von ca. 6 µs.

Entsprechend der empfangenen Signale stellt die zweite Basisstation BS2 ihren Zeitgeber ein und führt eine Synchronisation der eigenen Sendezeitpunkte durch. Die Zeitverschiebung der Aussendungen beider Basisstationen BS1, BS2 ist dabei maximal 6 µs. Ein bestimmter Offset-Wert kann dabei schon bei der Synchroniation berücksichtigt werden.

Eine dritte Basisstation BS3 empfängt die Signale der ersten und zweiten Basisstation BS1, BS2 und synchronisiert sich auf einen Mittelwert bezüglich die Empfangszeitpunkte beider Signale. Somit ist die maximale Verschiebung im Vergleich zur ersten Basisstation BS1 9 µs. Die Basisstationen BS4 und BS5 empfangen nur die Signale der dritten Basisstation BS3, so daß die Verschiebung sich auf maximal 15 µs erhöht, doch innerhalb eines gemeinsamen Funkfeldes (BS3 bis BS5) ist die Verschiebung weiterhin nur 6µs. Für die Basisstation BS6 ergibt sich eine zusätzliche Verschiebung von 6µs, womit selbst über die größte Entfernung von BS1 bis BS6 die maximale Verschiebung nur 21 µs beträgt. Dies entspricht etwa 3% der Dauer eines Zeitschlitzes.

Soll eine Vorgabe von maximal 5% Verschiebung innerhalb eines Zeitschlitzes eingehalten werden, so darf die maximale Verschiebung zwischen zwei weit voneinander entfernten Basisstationen BS1 und BS6 nicht mehr als 32 µs betragen. Die relative Verschiebung zwischen den Basisstationen BS3 bis BS5, die von einer Mobilstation MS gleichzeitig empfangen werden können ist jedoch kleiner. Der Effekt der Mittelung mehrerer Signale verbessert weiterhin die Synchronität. Je mehr Basistationen einbezogen werden, um so größer ist der Mittelungseffekt. Auch können weitere Angaben, wie die Empfangsleistung der Signale oder das Wissen über die benachbarten Basisstationen die Mittelung und damit die Synchronität durch entsprechende Wichtung verbessern.

Im Ausführungsbeispiel nach FIG. 6 werden nicht nur die Signale der benachbarten Zellen, sondern auch die der übernächsten Zellen empfangen. Die Verzögerung dieser Signale ist dann 12 µs. Die Basisstation BS5 empfängt die Signale von den Basisstationen BS1 und BS3, so daß bei einer Mittelung von 12 und 15 µs die Verschiebung nun 13,5 µs beträgt. Bei der Basisstation BS4 sind es 16,5 µs. Für die Basisstation BS6, die drei Signale der Basisstationen BS3 bis BS5 auswertet, werden die Verzögerungen von 21 µs, 19,5 µs und 22,5 µs gemittelt, so daß die Verschiebung schließlich 21 µs beträgt.

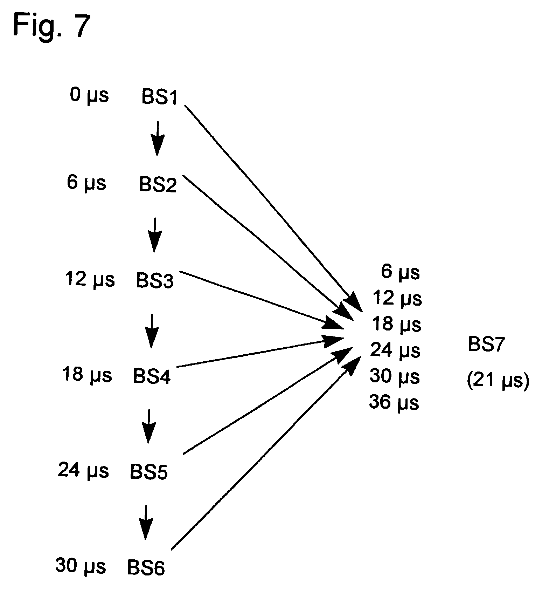

Selbst für den ungünstigsten, aber immer noch zulässigen Fall nach FIG. 7, bei dem fünf Basisstationen BS2 bis BS6 sich einer Kette folgend nacheinander auf die erste Basisstation BS1 synchronisieren, ergibt sich durch die Mittelung bei einer siebten Basisstation BS7 nur eine Verschiebung von 21 µs.

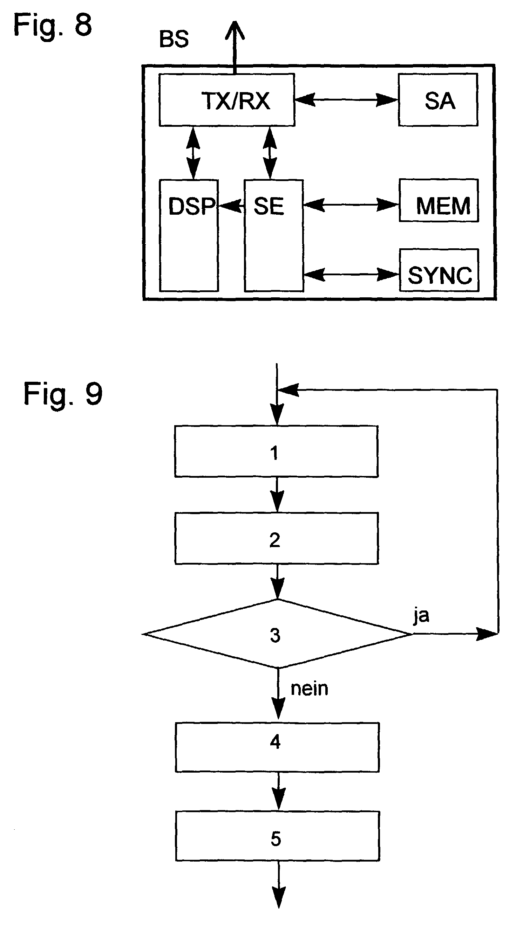

Die Synchronisation wird in einer Basisstation BS nach FIG. 8 durchgeführt. Diese besteht aus einer Sende/Empfangseinrichtung TX/RX, die abzustrahlende Sendesignale digital/analog wandelt, vom Basisband in den Frequenzbereich der Abstahlung umsetzt und die Sendesignale moduliert und verstärkt. Eine Signalerzeugungseinrichtung SA hat zuvor die Sendesignale in Funkblöcken zusammengestellt und dem entsprechenden Frequenzband und Zeitschlitz zugeordnet. Eine Signalverarbeitungseinrichtung DSP wertet über die Sende/Empfangseinrichtung TX/RX empfangene Signale aus.

Das Zusammenwirken der Komponenten und die Einstellung des Sendezeitpunkts nach die Synchronisation wird durch eine Steuereinrichtung SE gesteuert. Zugehörige Daten über den Sende- und den Umschaltpunkt SP und die konkreten Gegebenheiten der Verbindungen werden in einer Speichereinrichtung MEM gespeichert. Der Sendezeitpunkt als Konsequenz der Synchronisation wird in einer Synchronisationseinrichtung SYNC bestimmt. Die Synchronisation basiert dabei auf einer Mittelung von Empfangszeitpunkten der Signale mehrerer Basisstationen BS1 bis BS6. Durch die Sendezeitpunkt wird der Rahmenbeginn eingestellt.

Der Ablauf der Synchronisation ist FIG. 9 zu entnehmen. In einem ersten Schritt wird ein Signal einer ersten Basisstation BS1 empfangen und in einem zweiten Schritt der Empfangszeitpunkt ermittelt. In einem dritten Schritt wird entschieden, ob nach weiteren Basisstationen gesucht wird. Ist dies der Fall, so wiederholen sich die Schritte 1 und 2 für Signale weiterer Basisstationen. Es soll hervorgehoben werden, daß auch durch einen einzigen Durchlauf der Schritte 1 und 2 mehrere Empfangszeitpunkte bestimmt werden können. In einem vierten Schritt werden die Empfangszeitpunkte gemittelt und in einem fünften Schritt die Synchronisation basierend auf dem Mittelwert durchgeführt.

## Patentansprüche

1. Verfahren zum Betreiben eines Funk-Kommunikationssystems, bei dem
mehrere Basisstationen (BS1 bis BS7) vorgesehen sind, die mittels Funkverbindungen eine Nachrichtenübertragung zu Mobilstationen (MS) ermöglichen,
eine erste Basisstation (BS1) Signale aussendet,
eine zweite Basisstation (BS2) die Signale zumindest zeitweilig auswertet, und
die zweite Basisstation (BS2) entsprechend der Auswertung der Signale eine Synchronisation durchführt.

2. Verfahren nach Anspruch 1, bei dem
die Signale in einem Organisationskanal (BCCH) gesendet werden.

3. Verfahren nach einem der vorherigen Ansprüch, bei dem
die zweite Basisstation (BS2) die Signale einer möglichst großen Anzahl von benachbarten Basisstationen (BS1, BS3 bis BS7) auswertet.

4. Verfahren nach Anspruch 3, bei dem
die Synchronisation basierend auf einer Mittelung von Empfangszeitpunkten der Signale mehrerer Basisstationen (BS1, BS3 bis BS7) durchgeführt wird.

5. Verfahren nach Anspruch 4, bei dem
die Mittelung eine unterschiedliche Wichtung der Empfangszeitpunkte bezüglich unterschiedlicher Basisstationen (BS1, BS3 bis BS7) berücksichtigt.

6. Verfahren nach einem der vorherigen Ansprüch, bei dem
die zweite Basisstation (BS2) zusätzlich die Signale von Basisstationen von weiteren Funk-Kommunikationssystemen auswertet.

7. Verfahren nach einem der vorherigen Ansprüch, bei dem
die Nachrichtenübertragung der Funkverbindungen rahmenweise erfolgt, und die Synchronisation den Rahmenbeginn einstellt.

8. Verfahren nach einem der vorherigen Ansprüch, bei dem
die Synchronisation bei der Inbetriebnahme der zweiten Basisstation (BS2) durchgeführt wird.

9. Verfahren nach einem der vorherigen Ansprüch, bei dem
die Nachrichtenübertragung mittels eines TDD-Teilnehmerseparierungsverfahrens erfolgt.

10. Funk-Kommunikationssystem,
mit mehreren Basisstationen (BS1 bis BS7), die mittels Funkverbindungen eine Nachrichtenübertragung zu Mobilstationen (MS) ermöglichen,
mit einer Sendeeinrichtung (TX) einer ersten Basisstation (BS1), die Signale aussendet,
mit einer Empfangseinrichtung (RX) einer zweiten Basisstation (BS2), die die Signale zumindest zeitweilig auswertet, und
mit einer Synchronisationseinrichtung (SYNC), die entsprechend der Auswertung der Signale eine Synchronisation der zweiten Basisstation (BS2) durchführt.

11. Funk-Kommunikationssystem nach Anspruch 10, bei der
die Sendeeinrichtung (TX) für eine rahmenweise Nachrichtenübertragung ausgebildet ist, wobei die Signale in einem Organisationskanal (BCCH) gesendet werden, und
die Synchronisationseinrichtung (SYNC) derart ausgebildet ist, daß die Synchronisation basierend auf einer Mittelung von Empfangszeitpunkten der Signale mehrerer Basisstationen (BS1, BS3 bis BS7) durchgeführt wird und den Rahmenbeginn einstellt.
